# EUROPEAN PATENT SPECIFICATION

(11) **EP 0 765 725 B1**
(45) Date of publication and mention of the grant of the patent: **15.12.1999**
(21) Application number: 96115407.7
(22) Date of filing: 25.09.1996
(51) Int. Cl.: B29C 45/00, B29C 45/60, B29C 45/63

(54) **Process for injection molding polyethylene terephthalate**
Verfahren zum Spritzgiessen von Polyethylenterephthalat
Procédé de moulage par injection de polyéthylène téréphtalate

(30) Priority: 29.09.1995 JP 27677395
(43) Date of publication of application: 02.04.1997
(73) Proprietor: A.K. TECHNICAL LABORATORY, INC.,, Hanishina-gun, Nagano-ken (JP)
(72) Inventor: Koda, Hideaki, Ueda-shi, Nagano-ken (JP); Nakajima, Hisashi, Hanishina-gun, Nagano-ken (JP)
(74) Representative: Glawe, Delfs, Moll & Partner

(56) References cited:
- EP-A- 0 623 446
- GB-A- 2 287 213
- JP-A- 6 315 959
- US-A- 4 670 203

## Description

### BACKGROUND OF THE INVENTION

### 1. Field of the Invention

This invention relates to a process for injection molding a preform for subsequent stretch blow molding of a thin-wall bottle, wide-mouthed vessel and the like using amorphous polyethylene terephthalate as a moulding material.

### 2. Background Art

Polyethylene terephthalate (PET) which is produced from melt polymerizing ethylene glycol and terephthalic acid or dimethyl terephthalate is amorphous (uncrystallized) and transparent. Since PET does not reach equilibrium moisture content, it is moisture absorptive and is hydrolyzed in a molten state while absorbing moisture, thereby rendering impossible its moulding.

A granular material of amorphous PET (referred to as "A-PET" hereinafter) is slightly softened to achieve fusion bonding property when being heated above its glass transition temperature (Tg). Due to fusion bonding property it is difficult for the granular material to go into a screw during the molding of a preform, On the contrary crystallized PET (referred to as "C-PET" hereinafter) is not softened at a temperature higher than its Tg, retains its hardness and is not subjected to fusion bonding.

Since C-PET is obtained by solid-phase polymerizing A-PET at a high temperature, it is more expensive than A-PET. However, it has a higher IV (intrinsic viscosity) value than A-PET, is easily plasticized, and produces less acetaldehyde than A-PET. Therefore, it is widely used as a molding material for producing vessels and the like by stretch blow moulding.

Thus the inventors of the present invention have invented an injection moulding process as set out in European Patent Publication No.0623446A1 or Japanese Patent Application No.6-99163 that is capable of obtaining at low cost almost the same moulded article when A-PET, cheaper than C-PET is used as a moulding material as when C-PET is used as a moulding material, thereby employing a vent type injection moulding machine.

This injection molding process aims at limiting the amount of a granular molding material to be supplied to a feed zone of a vent type injection machine to ensure that the granular material is not stagnated by compression. This process makes possible the injection molding of a preform using A-PET which is difficult to be moulded.

However, the above effect cannot be obtained when the IV value of A-PET used as a moulding material is low, leading to difficult kneading during plasticization, affecting the density of an injection moulded preform, producing a moulded article having a non-uniform thickness after stretch blow moulding, and which in turn is not rigid enough. These problems are solved by A-PET having a high IV value (e.g., 0.72) which is available on the market as a material for stretch blow molding from A-PETs. However, such A-PET having a high IV value is expensive and creates problems, when being supplied to a screw or being plasticized in comparison with C-PET and hence, is difficult to use.

It is therefore an object of the invention to provide a further polyethylene terephthalate injection moulding process which can increase the IV value of the moulding material in the plasticization stage when inexpensive A-PET having a low IV value is used as a moulding material, thereby overcoming the difficulty of moulding a preform due to its low IV value and solving the problem of its physical properties.

### SUMMARY OF THE INVENTION

To attain the above object, the present invention provides a process for injection moulding a preform of a thin-wall vessel such as a bottle using A-PET as a moulding material by using a vent type injection machine, in accordance with claim 1, the process comprising adding a required amount of C-PET to A-PET, plasticizing the mixture material to increase the IV value of the moulding material to a value higher than the IV value of A-PET, and immediately thereafter injection moulding the preform.

The above C-PET can be mixed in situ and its mixing ratio is dependent upon the IV values of A-PET and C-PET used. When inexpensive A-PET is used as a moulding material, it is to be avoided that the amount of C-PET is greater than the amount of A-PET. A-PET may be moisture absorptive, C-PET is supplied to a vent type injection machine as a material to be mixed without being dried, and a preform is injection moulded.

In the present invention, the vent type injection machine has an injection screw consisting of a first stage and a second stage is mounted in a heating cylinder equipped with a vent so that it can be rotated and moved back and forth, and the amount of a granular material to be supplied to the feed zone of the first stage of the vent type injection machine is limited. The granular

US-A-4,670,203 discloses a method for manufacturing moulded products by injection molding a material containing as the principal component virgin and/or waste polyethylene terephthalate (PET) of average molecular weight of more than 10000 to which other polymer such as nylon and/or inorganic fillers can be added. The PET used in this method is amorphous PET and therefore will have a low intrinsic viscosity value unless an expensive type of amorphous PET having a high molecular weight is used. Accordingly, this prior art method does not solve the above mentioned problems. material is not stagnated by compression even if it is softened into an elastic state before it reaches the compression zone which follows the feed zone.

The mixture of A-PET and C-PET which is softened in the feed zone is compressed by a tapered surface of the compression zone, stretched in a molten state, primarily kneaded and supplied to the second stage where a volatile content produced by melting and water content thereof are sucked and removed from a vent opening by a vacuum pump. In this process of kneading, the IV value of the moulding material becomes higher than the IV value of A-PET as a whole by mixing C-PET which has a higher IV value than that of A-PET and kneading is thereby fully carried out.

Although the above vent continues vacuum suction without any interruption, even at the time of injection, a reduced pressure is applied at the time of injection, smaller than at the time of plasticization in order to prevent the molten moulding material from overflowing through the vent opening during the forward movement of the injection screw. The molten material which has been further plasticized in the second stage is metered at the front of the screw and injected into a mould by the forward movement of the injection screw to become a preform. The preform is transferred to a blow mould and immediately or later stretch blow moulded into a thin-wall vessel such as a bottle.

### BRIEF DESCRIPTION OF THE DRAWINGS

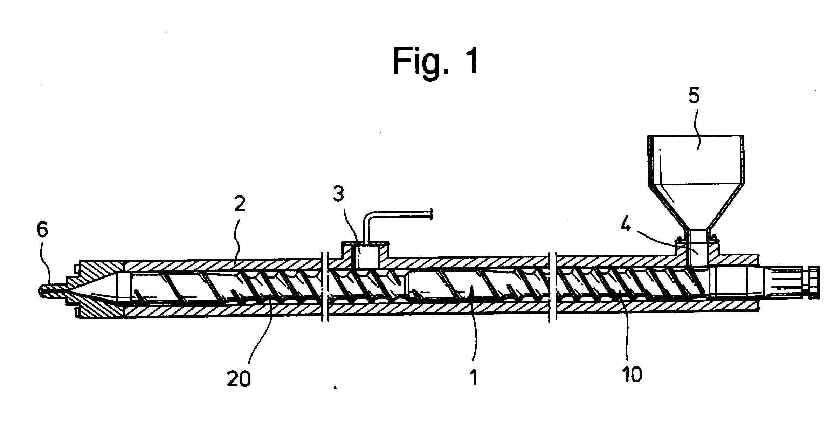

Fig. 1 is a schematic vertical side view of a vent type injection machine usuable for the injection moulding process of the present invention.

### DETAILED DESCRIPTION OF THE PREFERRED EMBODIMENTS

In the figure, reference numeral 1 is an injection screw which is inserted into a heating cylinder 2 in such a manner that it can be rotated and moved back and forth. This injection screw 1 is a combination of two screws, each having deep groove portions and shallow groove portions: a screw 10 located in a rear portion of the heating cylinder 2 and designed as the first stage and a screw 20 located in a front portion and designated as the second stage.

The above heating cylinder 2 is provided with a vent opening 3 in a wall portion thereof where the rear portion of the second stage 20 is located and the opening is sealed hermetically and connected to a vacuum pump (unshown). A feed port 4 is provided in a rear wall portion of the heating cylinder 2 where the rear portion of the first stage 10 is located and a hopper 5 is attached to the port 4. Not shown in the figure, band heaters for heating the moulding material supplied from the above feed port 4 by the rotation of the screw are provided at the outer periphery of the heating cylinder 2 and a nozzle 6.

To mould the preform using this vent type injection machine, the temperature of a portion of the heating cylinder 2 corresponding to the first stage 10 is set at 280°C and the temperature of a portion of the heating cylinder 2 corresponding to the second stage 20 is set at 270°C. The moulding material obtained by mixing undried granular A-PET and a required amount of granular C-PET is placed in the above hopper 5 and the injection screw 1 is rotated at a high speed (100 rpm). The vent opening 3 is depressurized to -730 mmHg by the vacuum pump.

The moulding material in the above hopper 5 is supplied to the feed zone of the first stage 10 by the rotation of the injection screw 1 while the amount of its supply is limited. The limitation of the amount of supply is carried out by reducing the sectional area of the screw groove in the rear portion of the feed zone to 2/3 that of the screw groove in the front portion of the feed zone, whereby the overconjection of the granular material in the front portion of the feed zone is prevented to ensure that the granular material is not solidified and stagnated by compression even if it is softened into an elastic state by heating before it reaches the compression zone.

The granular materials of A-PET and C-PET which are softened in the feed zone are compressed by a tapered surface of the compression zone, molten and drawn to be fused together and the total IV value of the materials is increased to a value higher than that of A-PET due to the IV value of C-PET in comparison with the case where only A-PET is used as a moulding material. Thereby, A-PET which is hardly kneaded due to its low IV value is kneaded completely and plasticization proceeds.

This molten material is supplied to the second stage 20 which is set at a temperature lower than that of the first stage 10. Since the screw groove of the feed zone of this stage is formed deep, the pressure of the molten material is lowered, the volatile content and the water content of the resin are vaporized, the volatile content and the water content enclosed by the molten material are further separated by the rotation of the screw, sucked and removed from the vent opening 3 by the vacuum pump. The molten material from which the volatile content and the water content have been removed is supplied to the metering zone of the second stage 20 by the rotation of the screw, further plasticized there and transferred to the front portion of the screw as in the normally-structured injection machine.

Along with the transfer of the molten material, the injection screw 1 moves backward, its rotation stops at a predetermined position, and the metering of the material is thus completed. The metered molten material is injection filled in a mould for moulding a preform by the forward movement of the injection screw. At this time, the suction of the vent opening 3 by the vacuum pump is changed to -650 mmHg to continue suction during injection. This suction can be easily controlled by taking in the outside air into a suction line by valve operation.

The mixing ratio of A-PET and C-PET and a simple average IV value are shown below.

### MATERIALS USED

| | | |
|---|---|---|
| A-PET | IV value: 0.63 | J005 of Mitsui PET Resin Co. |
| C-PET | IV value: 0.79 | J125 of Mitsui PET Resin Co. |
| C-PET | IV value: 0.85 | J135 of Mitsui PET Resin Co. |

### MIXING RATIO (1)

| A-PET J005 | C-PET J125 | simple average IV value |
|---|---|---|
| 5 | 5 | 0.710 |
| 6 | 4 | 0.694 |
| 7 | 3 | 0.678 |
| 8 | 2 | 0.662 |

### MIXING RATIO (2)

| A-PET J005 | C-PET J135 | simple average IV value |
|---|---|---|
| 5 | 5 | 0.740 |
| 6 | 4 | 0.718 |
| 7 | 3 | 0.696 |
| 8 | 2 | 0.674 |

### Example

- Material Resin:: A-PET J005/C-PET J125
- Mixing Ratio:: 7:3, IV value: 0.678
- Moulded Article:: flat bottle
- Dimension:: total height: 250 mm, diameter of mouth portion: 23.5 mm, length below neck: 230 mm, outer diameter of barrel portion: 90 x 50 mm, thickness of barrel portion: 0.4 mm, weight: 36 g

### Preform

- Dimension:: total height: 142 mm, inner diameter of mouth portion: 23.5 mm, length below neck: 122 mm, thickness of barrel portion: 2.9 mm, outer diameter of upper barrel portion: 28 mm, outer diameter of lower end barrel portion: 24 mm, draft: 2/122

### Preform Moulding Conditions

### Heating Cylinder Setting Temperature

- first stage:: front portion: 285°C, intermediate portion: 285°C, rear end portion: 280°C
- second stage:: front portion: 270°C, rear portion: 270°C
- Nozzle Temperature:: 270°C

### Injection Mould Temperature (set temperature)

- cavity mould:: 15°C
- core mold:: 15°C
- Injection Pressure (dwell):: 75 kg/cm²
- Fill Dwell Time:: 6.0 seconds
- Cooling Time:: 2.8 seconds
- Release Temperature:: 60 to 70°C (preform surface temperature)

### Stretch Blow Moulding Conditions

- Mould Temperature (set temperature):: 20°C
- Stretch Blow Temperature:: 86°C (preform surface temperature)
- Blow Pressure (stretch):: 20 kg/cm²
- Blow Time:: 2.0 seconds

### Stretch Ratios

- longitudinal (axial direction):: 1.9 times
- transverse (radial direction):: 3.6 x 2 times

### Results

The preform taken out from the injection mould after being cooled completely was transparent and free from distortion and had uniform density. When a plurality of preforms were moulded simultaneously, there was no difference among them and good products were obtained. Moulded articles obtained by stretch blow molding were transparent, had no unevenness in thickness and were comparable to C-PET products.

## Claims

1. A process for injection moulding a preform using amorphous polyethylene terephthalate as a moulding material and using a vent (3) type injection machine (1, 2), the process comprising the steps of
adding a required amount of crystallized polyethylene terephthalate to said amorphous polyethylene terephthalate;
plasticizing the resulting mixture material to obtain a plasticized moulding material having an increased intrinsic viscosity value higher than the intrinsic viscosity value of said amorphous polyethylene terephthalate;
and immediately thereafter injection moulding said plasticized moulding material to obtain said preform.

2. A process according to claim 1, wherein said vent type injection machine comprises a heating cylinder (2), a vent opening (3) provided on said heating cylinder (2), an injection screw (1) consisting of a first stage (10) and a second stage (20) and provided within said heating cylinder (2) rotatably and movably, and wherein the amount of a granular material to be supplied to a feed zone of the first stage (10) of the vent type injection machine is limited so that the granular material is not stagnated by compression even if it is softened into a plastic state before it reaches the compression zone of the first stage following the feed zone of the first stage.

3. A process according to claim 2, wherein the amount of supply is limited by reducing the sectional area of the screw groove in the rear portion of the feed zone to 2/3 that of the screw groove in the front portion of the feed zone.

## Patentansprüche

1. Verfahren zum Spritzgießen einer Vorform unter Verwendung von amorphem Polyethylen-Terephtalat als Spritzgießmaterial und einer Spritzgießmaschine (1, 2) vom Entgasungstyp (3), wobei das Verfahren die Schritte aufweist:
Zufügen einer erforderlichen Menge von kristallisiertem Polyethylen-Terephtalat zu dem amorphen Polyethylen-Terephalat;
Plastifizieren der erhaltenen Materialmischung zum Erhalt eines plastifizierten Spritzgießmaterials mit einem erhöhten inneren Viskositätswert, der höher ist als der innere Viskositätswert des amorphen Polyethylen-Terephtalats;
und unmittelbar anschließendes Spritzgießen des plastifizierten Spritzgießmaterials zum Erhalt der Vorform.

2. Verfahren nach Anspruch 1, bei dem die Spritzgießmaschine vom Entgasungstyp einen Heizzylinder (2), eine an dem Heizzylinder (2) vorgesehene Entgasungsöffnung (3) und eine Spritzschnecke (1) aufweist, die aus einer ersten Stufe (10) und einer zweiten Stufe (20) besteht und drehbar und bewegbar in dem Heizzylinder (2) angeordnet ist, und wobei die Menge eines Granulatmaterials, das einer Zuführzone der ersten Stufe (10) der Spritzgießmaschine vom Entgasungstyp zuzuführen ist, so begrenzt wird, daß das Granulatmaterial nicht durch Kompression zum Stillstand kommt, auch wenn es zu einem plastifiziertem Zustand erweicht wird, bevor es die auf die Zuführzone der ersten Stufe folgende Kompressionszone der ersten Stufe erreicht.

3. Verfahren nach Anspruch 2, bei dem die Zuführmenge begrenzt ist durch Reduzierung der Querschnittfläche des Schneckengangs im hinteren Bereich der Zuführzone auf 2/3 derjenigen des Schneckengangs im vorderen Bereich der Zuführzone.

## Revendications

1. Procédé de moulage par injection d'une préforme en utilisant un polyéthylène téréphtalate amorphe en tant que matière de moulage et une machine d'injection (1,2) du type à trou d'évent (3), caractérisé en ce qu'il comprend les étapes consistant à ajouter une quantité requise de polyéthylène téréphtalate cristallisé au polyéthylène téréphtalate amorphe, à plastifier la matière du mélange résultant de manière à obtenir une matière de moulage plastifiée ayant une valeur de viscosité intrinsèque accrue supérieure à la valeur de viscosité intrinsèque du polyéthylène téréphtalate amorphe, et immédiatement après à mouler par injection la matière de moulage plastifiée afin d'obtenir la préforme.

2. Procédé suivant la revendication 1 caractérisé en ce que la machine d'injection du type à trou d'évent comprend un cylindre chauffant un trou d'évent (3) prévu sur ce cylindre chauffant (2), une vis d'injection (1) constituée d'un premier étage (10) et d'un second étage (20) montée mobile en rotation et en translation à l'intérieur du cylindre chauffant (2) et en ce que la quantité d'une matière granulaire devant être fournie à une zone d'alimentation du premier étage (10) de la machine d'injection du type à trou d'évent est limitée de telle façon que la matière granulaire ne soit pas amenée à stagner sous l'effet de la compression même si elle est ramollie dans un état plastique avant qu'elle n'atteigne la zone de compression du premier étage faisant suite à la zone d'alimentation du premier étage.

3. Procédé suivant la revendication 2 caractérisé en ce que la quantité de matière fournie est limitée en réduisant l'aire transversale de la gorge de la vis dans la portion arrière de la zone d'alimentation à deux tiers de celle de la gorge de la vis dans la portion avant de la zone d'alimentation.
